Europäisches Patentamt

European Patent Office

Office européen des brevets

(11) Veröffentlichungsnummer: **0 299 418 B1**

(12) **EUROPÄISCHE PATENTSCHRIFT**

(45) Veröffentlichungstag der Patentschrift: **30.09.92**

(51) Int. Cl.⁵: **C01B 17/56**, B01D 3/00

(21) Anmeldenummer: **88111095.1**

(22) Anmeldetag: **12.07.88**

(54) **Verfahren zur Trocknung von Schwefeldioxid.**

(30) Priorität: **16.07.87 DE 3723572**

(43) Veröffentlichungstag der Anmeldung:
**18.01.89 Patentblatt 89/03**

(45) Bekanntmachung des Hinweises auf die
Patenterteilung:
**30.09.92 Patentblatt 92/40**

(84) Benannte Vertragsstaaten:
**AT DE FR IT**

(56) Entgegenhaltungen:
**US-A- 1 917 736**
**US-A- 4 110 087**
**US-A- 4 542 114**

(73) Patentinhaber: **Linde Aktiengesellschaft**
**Abraham-Lincoln-Strasse 21**
**W-6200 Wiesbaden(DE)**

(72) Erfinder: **Becker, Hans, Dr. Ing.**
**Zwengauer Weg 9**
**W-8000 München 71(DE)**

(74) Vertreter: **Schaefer, Gerhard, Dr.**
**Linde Aktiengesellschaft Zentrale Patentab-**
**teilung**
**W-8023 Höllriegelskreuth(DE)**

**Beschreibung**

Die Erfindung betrifft ein Verfahren zur Feintrocknung von Kohlenwasserstoffe enthaltendem $SO_2$.

Bei bestimmten Verfahren zur Entschwefelung von Rauch- oder Röstgasen oder auch zur Aufarbeitung von Altsäure fällt als Nebenprodukt primär ein hochkonzentriertes $SO_2$ an, das z.B. entweder direkt zu Schwefelsäure weiterverarbeitet oder nach Feinreinigung verflüssigt und zur weiteren Verarbeitung, z.B. in der Lebensmittel- oder Zellstoffindustrie, abtransportiert wird. Da etwaiges, in dem Schwefeldioxid enthaltenes Wasser so mit dem Schwefeldioxid reagiert, daß sich schwefelige Säure bildet, welche äußerst korrosiv wirkt, ist es vor jeder Verflüssigung notwendig, das $SO_2$ zu trocknen. Bisher wurde entweder durch Wäsche mit konzentrierter Schwefelsäure oder adsorptiv, z.B. mit Silicagel (LINDE Berichte aus Technik und Wissenschaft, Nr. 57 (1985), Seite 3 ff) getrocknet.

Die genannten Trocknungsverfahren eignen sich vor allem zur Trocknung von reinem $SO_2$, bedingen jedoch jeweils einen eigenen Verfahrensschritt. Enthält das $SO_2$ zusätzlich Spuren von Kohlenwasserstoffen, ergibt sich der Nachteil, daß bei der Trocknung mit $H_2SO_4$ die Trockensäure nach kurzer Laufzeit verworfen werden muß, da sie verschlammt. Bei der adsorptiven Trocknung führen die Kohlenwasserstoffe zu einer bleibenden Schädigung des Adsorbens, so daß es nach kurzer Laufzeit erneuert werden muß.

Aus der US-A-4,110,087 ist ein Verfahren zur Produktion von wasserfreiem $SO_2$ durch Abtrennung aus einem flüssigen Wasserstrom, der gelöst $SO_2$ und $CO_2$ enthält, bekannt. Ferner wird ein Verfahren zur Gewinnung von wasserfreiem flüssigem $SO_2$ aus einem Gasstrom, der sowohl $SO_2$ als auch $CO_2$ und möglicherweise Gase wie $H_2$ und $N_2$ enthält, beschrieben.

Die US-A-1,917,736 lehrt ein Verfahren zur Gewinnung von reinem und wasserfreiem flüssigem $SO_2$, wobei von einem zu behandelnden Extrakt, das ungesättigte und aromatische Kohlenwasserstoffe, flüssiges $SO_2$ und Wasser enthält, in einem Verdampfer $SO_2$-Dampf abgetrennt und zusammen mit ebenfalls verdampften Wasser in eine Rektifikationssäule geleitet wird. Die Kohlenwasserstoffe werden zunächst vom $SO_2$-/Wasser-Dampf-Gemisch abgetrennt, danach wird das $SO_2$ durch Abtrennung des Wassers in der Rektifikationssäule getrocknet.

Bei der im Verfahren notwendigen Abkühlung kann es, insbesondere wenn die Verfahrensdrücke niedrig sind, bei sehr feuchten Gasen schon bei Temperaturen weit über 0°C zur Abscheidung fester $SO_2$-Gashydrate kommen, die sich auf die nachfolgende Destillation störend auswirken.

Es ist daher die Aufgabe der Erfindung, ein Verfahren zur Feintrocknung von Kohlenwasserstoffe enthaltendem $SO_2$ so auszugestalten, daß es von den Nachteilen der bekannten Verfahren frei ist und den Verfahrensablauf vereinfacht.

Diese Aufgabe wird erfindungsgemäß dadurch gelöst, daß im $SO_2$ enthaltene schwere Kohlenwasserstoffe zusammen mit dem Wasser destillativ vom $SO_2$ abgetrennt werden und daß bei niedrigen Verfahrensdrücken die Bildung von $SO_2$-Gashydraten durch Zugabe eines Hydratinhibitors unterdrückt wird.

Die Erfindung ermöglicht es, die destillative Trocknung in eine nachfolgende Destillation zur Reinigung von $SO_2$ zu integrieren, wobei ein eigener Verfahrensschritt zur Trocknung des $SO_2$ nach der Abtrennung der schweren Kohlenwasserstoffe nicht mehr nötig ist. Gleichzeitig wird durch Zugabe eines Hydratinhibitors die Bildung von $SO_2$-Gashydraten wirksam unterdrückt.

Dies bedeutet Einsparung von Apparaten und Betriebsmitteln und damit eine erhebliche Senkung der Betriebskosten. Die Tatsache, daß nunmehr ein Verfahrensschritt weniger ausgeführt werden muß, bewirkt den zusätzlichen Vorteil, daß dabei auch die Betriebssicherheit erhöht wird.

In einer weiteren Ausbildung des Erfindungsgedankens ist es möglich, vor der destillativen Trocknung von gasförmigem $CO_2$ eine grobe Vortrocknung durch Kondensation des Wassers und anschließende Abscheidung vorzunehmen.

Falls feuchtes $SO_2$ bei einer Temperatur über 12,1°C bzw. bei einem $SO_2$-Partialdruck über 2,6 bar verflüssigt wird, kann erfindungsgemäß vor der destillativen Feintrocknung eine grobe Vortrocknung durch Dekantieren des Wassers erfolgen, da in flüssigem $SO_2$ unter diesen Bedingungen nur ca. 4-5 mol% Wasser löslich sind.

Als Hydratinhibitor ist es möglich, einen Alkohol, ein Glykol oder einen Glykolether zu verwenden. Hierbei genügt eine relativ kleine Menge des Zusatzmittels, um die Hydratbildung zu verhindern. Den Verlauf der Destillation stört das Zusatzmittel nicht, da es problemlos Zusammen mit dem Sumpfprodukt weiterverarbeitet werden kann.

Mit besonderem Vorteil wird bei dem erfindungsgemäßen Verfahren Methanol zur Hydratunterdrückung verwendet. Methanol ist preiswert, leicht verfügbar und besitzt eine günstige Viskosität. Ferner kann es bei der Destillation ohne Schwierigkeiten zusammen mit den Kohlenwasserstoffen abgetrennt werden.

Im folgenden sei die Erfindung anhand eines schematisch dargestellten Ausführungsbeispiels näher erläutert:

$SO_2$-Rohgas (1,9 bar, 120°C; 11,2 mol/s; bei 55°C wassergesättigt) tritt durch Leitung 1 in die Anlage ein. Das Rohgas hat folgende Zusammensetzung:

| | |
|---|---|
| $SO_2$ | 86,74 mol% |
| $CO_2$ | 3,31 mol% |
| $N_2$ | 1,04 mol% |
| $O_2$ | 0,39 mol% |
| $H_2$ | 8,42 mol% |
| schwere Kohlenwasserstoffe 1000 ppm. | |

Im Kühler 2 wird das Gas auf 20° C abgekühlt. Dabei kondensiert Wasser aus. Durch Druckabfall im Kühler erniedrigt sich der Druck auf 1,7 bar. Das Gas-Wasser-Gemisch gelangt durch Leitung 3 in einen Abscheider 4, aus dem das abgeschiedene Wasser (0,8 mol/s) durch Leitung 5 entnommen wird. Über Leitung 6 wird das Rohgas vom Kopf des Abscheiders abgezogen und nach Zufügung von Methanol (0,15 mol/s) (bei 7) dem unteren Abschnitt einer Rektifikationssäule 8 zugeführt. Im oberen Abschnitt dieser Säule wird das Rohgas durch eine Kühlschlange 9 teilweise verflüssigt. Die verflüssigten Anteile dienen in der Rektifikationssäule 8 als Rücklauf, durch dessen rektifizierende Wirkung das Wasser und die schweren Kohlenwasserstoffe aus dem in der Kolonne aufsteigenden Gas nahezu vollständig entfernt werden, so daß das die Rektifikationssäule 8 über Leitung 10 mit einer Temperatur von ca. 1° C verlassende, gereinigte $SO_2$ (8,78 mol/s) praktisch trocken ist (20 ppm $H_2O$). Am Sumpf verlassen die Rektifikationssäule 8 durch Leitung 11 mit einer Temperatur von etwa 5° C 1,54 mol/s einer Flüssigkeit folgender Zusammensetzung:

| | |
|---|---|
| $SO_2$ | 80,52 mol-% |
| $H_2O$ | 9,09 mol-% |
| $CH_3OH$ | 9,74 mol-% |
| Kohlenwasserstoffe 0,65 mol-% | |

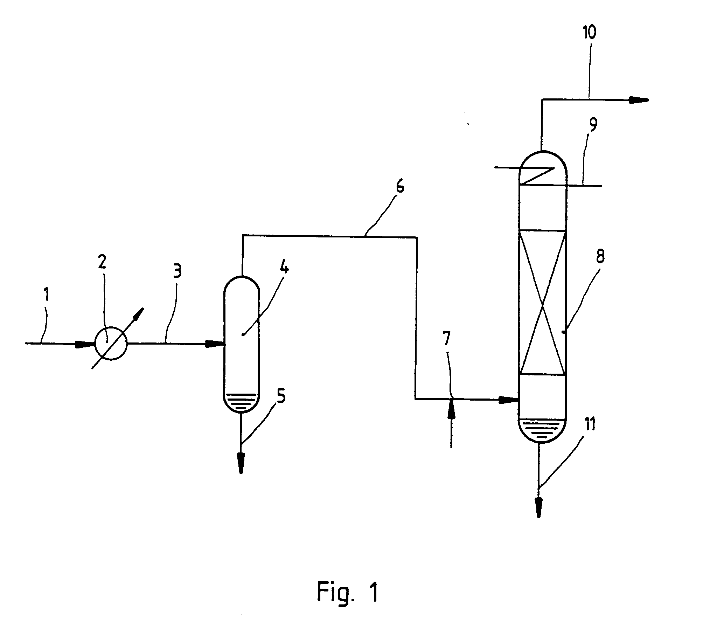

**Patentansprüche**

1. Verfahren zur Feintrocknung von Kohlenwasserstoffe enthaltendem $SO_2$ durch destillative Abtrennung des Wassers vom $SO_2$, dadurch gekennzeichnet, daß im $SO_2$ enthaltene schwere Kohlenwasserstoffe zusammen mit dem Wasser destillativ vom $SO_2$ abgetrennt werden und daß bei niedrigen Verfahrensdrücken die Bildung von $SO_2$-Gashydraten durch Zugabe eines Hydratinhibitors unterdrückt wird.

2. Verfahren nach Anspruch 1, dadurch gekennzeichnet, daß vor der destillativen Trocknung von gasförmigen $SO_2$ eine grobe Vortrocknung durch Kondensation des Wassers und anschließende Abscheidung erfolgt.

3. Verfahren nach Anspruch 1, dadurch gekennzeichnet, daß vor der destillativen Trocknung von bereits verflüssigtem $SO_2$ eine grobe Vortrocknung durch Dekantieren des Wassers erfolgt.

4. Verfahren nach einem der Ansprüche 1 bis 3, dadurch gekennzeichnet, daß zur Hydratunterdrückung ein Alkohol, ein Glykol oder ein Glykolether verwendet wird.

5. Verfahren nach einem der Ansprüche 1 bis 4, dadurch gekennzeichnet, daß zur Hydratunterdrückung Methanol verwendet wird.

**Claims**

1. A process for the fine drying of $SO_2$ containing hydrocarbons by separating the water from the $SO_2$ by distillation, characterised in that heavy hydrocarbons contained in the $SO_2$, together with the water, are separated from the $SO_2$ by distillation, and that at low process pressures the formation of $SO_2$ gas hydrates is suppressed by the addition of a hydrate inhibitor.

2. A process as claimed in Claim 1, characterised in that the prior to the drying by distillation of gaseous $SO_2$, a rough preliminary drying is carried out by condensation of the water and subsequent separation.

3. A process as claimed in Claim 1, characterised in that prior to the drying by distillation of already liquified $SO_2$, a rough preliminary drying is carried out by decanting the water.

4. A process as claimed in one of Claims 1 to 3, characterised in that an alcohol, a glycol or a glycol ether is used for the hydrate suppression.

5. A process as claimed in one of Claims 1 to 4, characterised in that methanol is used for the hydrate suppression.

**Revendications**

1. Procédé de séchage fin de $SO_2$ contenant des hydrocarbures par séparation par distillation de l'eau contenue dans $SO_2$, caractérisé en ce que les hydrocarbures lourds contenus dans $SO_2$ sont séparés du $SO_2$ par distillation en même temps que l'eau et en ce que la formation des hydrates gazeux de $SO_2$ qui se produit à la pression la plus basse mise en oeuvre dans le procédé est empêchée par addition d'un inhibiteur de formation d'hydrates.

2. Procédé selon la revendication 1, caractérisé en ce que le séchage par distillation de $SO_2$ gazeux est précédé d'un séchage grossier par condensation de l'eau et d'une séparation consécutive à ce séchage grossier.

3. Procédé selon la revendication 1, caractérisé en ce que le séchage par distillation du $SO_2$ déjà liquéfié est précédé d'un séchage grossier par décantation de l'eau.

4. Procédé selon l'une quelconque des revendications 1 à 3, caractérisé en ce que la formation d'hydrates est empêchée par emploi d'un alcool, d'un glycol ou d'un glycoléther.

5. Procédé selon l'une quelconque des revendications 1 à 4, caractérisé en ce que la formation d'hydrates est empêchée par emploi du méthanol.

Fig. 1